## Europäisches Patentamt
## European Patent Office
## Office européen des brevets

(19)

(11) Veröffentlichungsnummer: **0 038 432**
**B1**

(12) **EUROPÄISCHE PATENTSCHRIFT**

(45) Veröffentlichungstag der Patentschrift:
30.05.84

(51) Int. Cl.³: **B 65 G 59/02**

(21) Anmeldenummer: **81102303.5**

(22) Anmeldetag: **27.03.81**

(54) **Vorrichtung zum lagenweisen Entstapeln insbesondere aus langgestreckten Profilhölzern geschichteter Stapel.**

(30) Priorität: **21.04.80 DE 3015648**

(43) Veröffentlichungstag der Anmeldung:
**28.10.81 Patentblatt 81/43**

(45) Bekanntmachung des Hinweises auf die Patenterteilung:
**30.05.84 Patentblatt 84/22**

(84) Benannte Vertragsstaaten:
**AT BE CH DE FR GB IT LI LU NL SE**

(56) Entgegenhaltungen:
**DE - A - 2 549 234**
**DE - A - 2 551 846**
**DE - B - 2 323 227**

(73) Patentinhaber: **Heinz Schiepe Grosshandel und Generalvertretung für Holzbearbeitungsmashinen, Haynauerstrasse 72 a- 74, D-1000 Berlin 46 (DE)**

(72) Erfinder: **Schiepe, Heinz, Griegstrasse 44, D-1000 Berlin 33 (DE)**

(74) Vertreter: **Lüke, Dierck-Wilm, Dipl.-Ing., Gelfertstrasse 56, D-1000 Berlin 33 (DE)**

## Beschreibung

Die Erfindung bezieht sich auf eine Vorrichtung zum lagenweisen Entstapeln insbesondere aus langgestreckten Profilhölzern geschichteter Stapel gemäss den Merkmalen des Oberbegriffes des Patentanspruches 1.

Bei einer bekannten Vorrichtung dieser Art wird die Stapellage in Längsrichtung in voller Länge vom Stapel abgeschoben und auf die hinter dem Stapel befindliche Aufnahmeeinrichtung verbracht, von welcher die Stapellage in ihre einzelnen Stapellagenelemente vereinzelt wird. Eine solche Vorrichtung ist mindestens doppelt so lang wie die Gesamtlänge des Stapels. Hierdurch wird ein erheblicher Raumbedarf benötigt. Darüber hinaus ist der Zeitaufwand für das völlige Abschieben einer kompletten Stapellage in ihrer gesamten Länge vom Stapel zeitlich sehr aufwendig.

Es ist darüber hinaus aus der DE-B Nr. 2323227 eine Vorrichtung zum selbsttätigen Beschicken von Bearbeitungsmaschinen mit einem geschichteten Stapel entnommenen, langgestreckten Profilteilen bekannt. Mit dieser Vorrichtung wird eine Stapellage mittels Anschlägen quer vom Stapel abgeschoben und dann durch Verschieben der einzelnen Stapellagenelemente in Längsrichtung vereinzelt. Das Querabschieben ist jedoch nur möglich, wenn die Schiebefläche absolut eben ist, d.h. wenn sämtliche Stapellagenelemente exakt gleiche Dickenabmessungen aufweisen und absolut eben, d.h. nicht verbogen, verwunden od. dgl. sind, oder wenn regelmässig zwischen zwei Stapellagen mehrere Zwischenleisten quer auf dem Stapel liegen. Da der Idealfall absolut ebener, nicht verbogener, nicht verwundener Stapellagenelemente nur selten vorliegt, ist das Querabschieben einer Stapellage praktisch nur bei Vorhandensein von Zwischenleisten möglich.

Der Erfindung liegt daher die Aufgabe zugrunde, eine Vorrichtung zum lagenweisen Entstapeln insbesondere aus langgestreckten Profilhölzern geschichteter Stapel der gattungsgemässen Art zu schaffen, mit welcher bei kleinem Raumbedarf und schneller Arbeitstaktfolge ein lagenweises Entstapeln möglich ist, um so Bearbeitungsmaschinen mit vereinzelten Stapellagenelementen schnell beschicken zu können oder um einen Stapel umzusetzen, zum Beispiel zum Trockenstapeln mit Luftspalt.

Die Lösung dieser Aufgabe ergibt sich aus den kennzeichnenden Merkmalen des Patentanspruches 1. Mit dem Gegenstand der Erfindung wird jede einzelne Stapellage nur um einen geringen Betrag in Längsrichtung des Stapels mittels der Schiebeeinrichtung angeschoben, so dass das der Schiebeeinrichtung entgegengesetzte Ende der Stapellage gerade auf dem Stützelement zur Auflage kommt, das mit seiner Oberkante unmittelbar unterhalb der Unterkante der angeschobenen Stapellage vor der entsprechenden Stirnseite des Stapels steht. Durch Anheben des Stützelementes kommt die Stapellage vom Stapel frei, so dass nacheinander Tragarme quer unter die angehobene Stapellage gefahren werden können, welche die Stapellage übernehmen, um diese weiter zu vereinzeln. Die erfindungsgemässe Vorrichtung hat nur einen geringfügig grösseren Raumbedarf als der Stapel selbst. Das Anschieben der einzelnen Stapellagen erfolgt auf kurzem Wege in kürzester Zeit.

Die Schiebeeinrichtung umfasst in zweckmässiger Weiterbildung der Erfindung einzelne nebeneinander angeordnete, voneinander unabhängig bewegbare Lamellen, welche sich selbsttätig an die gegebenenfalls unterschiedlich ausgebildeten Enden der einzelnen Stapellagenelemente anlegen. Die Schiebeeinrichtung ist zweckmässigerweise in vertikaler Richtung hin- und herbewegbar.

In weiterer Ausbildung der Erfindung ist oberhalb des Stützelementes ein Niederhalter für die Stapellage angeordnet. Hierdurch kann die vom Stützelement angehobene Stapellage um das Stützelement selbst herumgeschwenkt werden, wobei gleichzeitig die Schiebeeinrichtung vertikal mit angehoben bzw. verfahren wird. Hierdurch kommt die Stapellage vom Stapel frei, so dass die Tragarme zur Übernahme der Stapellage quer ausgefahren werden können. Ein solches Verfahren ist jedoch nur bei relativ kurzen Stapellagen möglich.

In weiterer Ausbildung der Erfindung ist das Stützelement zur Schiebeeinrichtung hin und von diesem weg im wesentlichen horizontal bewegbar gelagert. Hierdurch wird ermöglicht, dass das Stützelement nach dem Anheben der angeschobenen Stapellage zwischen diesem und dem Stapel in Richtung auf die Schiebeeinrichtung verfahren werden kann, so dass die angeschobene Stapellage nach und nach angehoben wird, so dass die Tragarme nacheinander quer unter die angehobene Stapellage verfahren werden können, sobald das Stützelement den Bereich des auszufahrenden Tragarmes passiert hat.

Zweckmässige Weiterbildungen der Erfindung ergeben sich aus den weiteren Unteransprüchen.

Die Erfindung ist nachfolgend anhand von in den Zeichnungen dargestellten Ausführungsbeispielen näher erläutert. Es zeigen:

Fig. 1 eine Draufsicht auf die Vorrichtung,

Fig. 2 und 3 Seitenansichten der Vorrichtung in sich geringfügig unterscheidenden Bauformen,

Fig. 4 eine Längsschnitt durch die Schiebeeinrichtung,

Fig. 5 einen Querschnitt durch die Schiebeeinrichtung,

Fig. 6 eine Draufsicht auf die Schiebeeinrichtung,

Fig. 7 eine Seitenansicht des Stützelementes,

Fig. 8 eine Stirnansicht des Stützelementes,

Fig. 9 eine Draufsicht auf das Stützelement,

Fig. 10 bis 14 Funktionsdarstellungen der Vorrichtung,

Fig. 15 eine Ansicht der Stapellängsseite mit auf ausgefahrenen Tragarmen befindlicher Stapellage und unterhalb der Tragarme befindlichen Bürsten zum Abschieben von Zwischenleisten,

Fig. 16 und 17 Seitenansichten hierzu zur prinzipiellen Darstellung verschiedener Möglichkeiten der Abführung der abgeschobenen Zwischenleisten,

Fig. 18 eine der Fig. 15 entsprechende Darstellung, bei welcher die Abschiebebürsten für die Zwischenleisten am Rahmen des horizontal bewegbaren Stützelementes angebracht ist,

Fig. 19 eine Seitenansicht hierzu,

Fig. 20 eine teilweise Seitenansicht eines neben dem Stapel befindlichen Entstapelautomaten mit ausgefahrenem Tragarm,

Fig. 21 eine Draufsicht hierzu, und

Fig. 22 eine Seitenansicht der Vorrichtung mit Entstapelautomat und daneben befindlichem Stapelautomat.

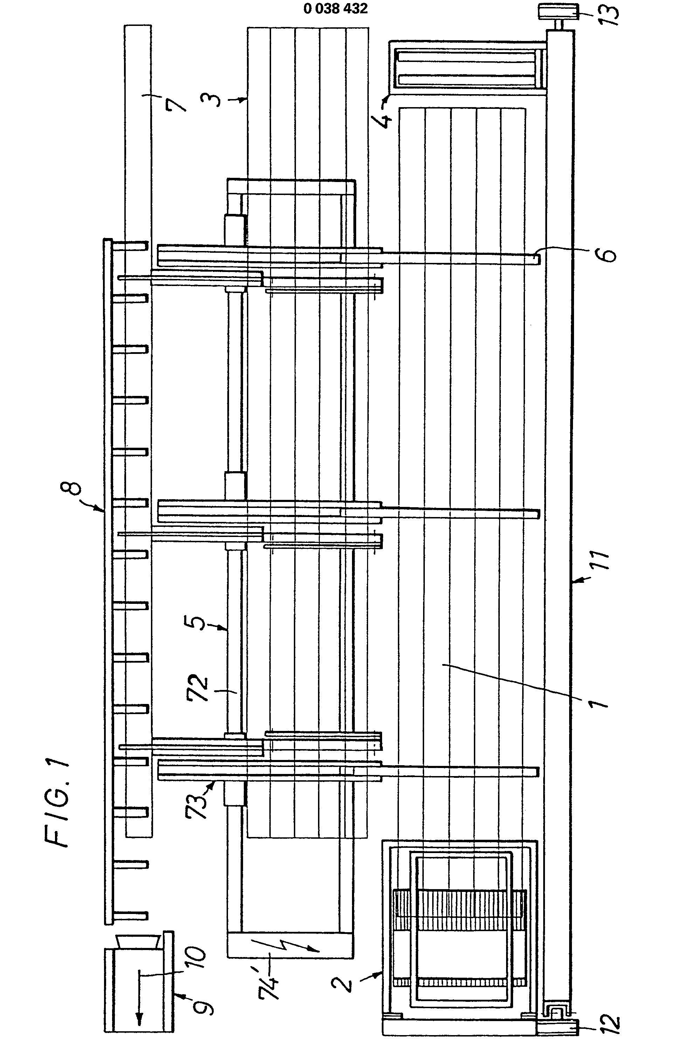

Die in Fig. 1 in einer Draufsicht dargestellte Vorrichtung zum lagenweisen Entstapeln insbesondere aus langgestreckten Profilhölzern geschichteter Stapel 1 umfasst an einer Stirnseite des Stapels 1 eine quer angeordnete Schiebeeinrichtung 2 zum Anschieben einer Stapellage 3, an der gegenüberliegenden Stirnseite des Stapels 1 ein Stützelement 4 zur Aufnahme des einen Endes der mittels der Schiebeeinrichtung 2 angeschobenen Stapellage 3 und einen neben dem Stapel 1 angeordneten Automaten 5 mit quer über den Stapel 1 horizontal hin- und zum herfahrbaren Tragarmen 6 zum Übernehmen der Stapellage 3 und zum Vereinzeln in einzelne Stapellagenelemente 7, die über einen Rollgang 8 und einen Einschussbeschleuniger 9 in Richtung des Pfeiles 10 einer nicht dargestellten Bearbeitungsmaschine zugeführt werden. Die Vorrichtung umfasst ferner eine Führungsbahn 11 zur Horizontalbewegung des Stützelementes 4 und Säulen 12, 13 zur Lagerung der Führungsbahn 11 und der Schiebeeinrichtung 2.

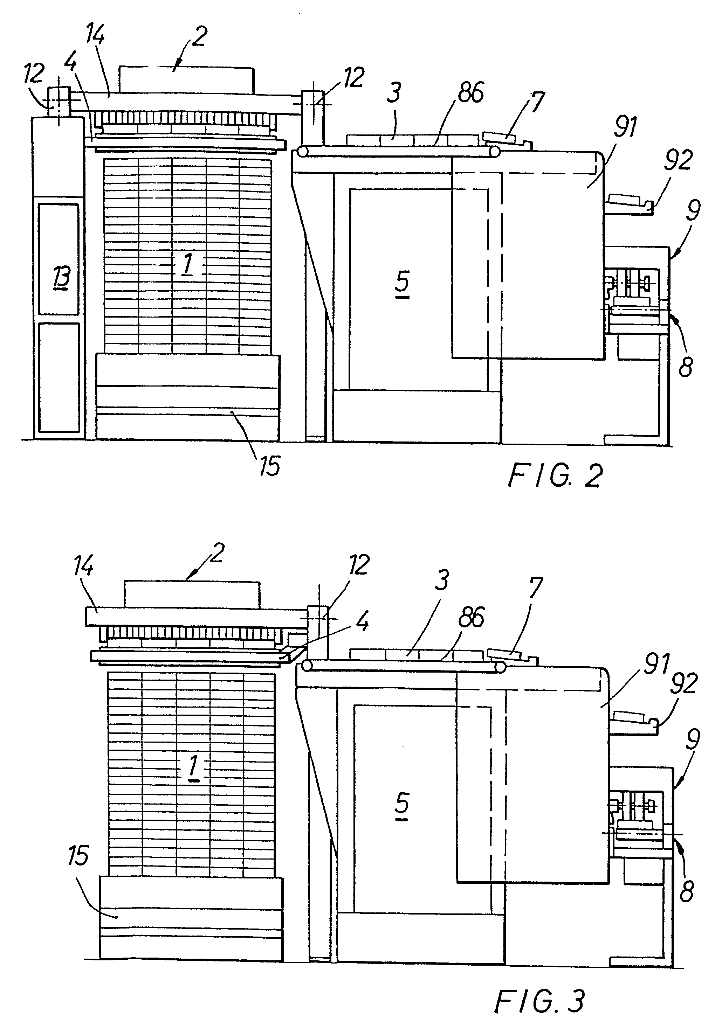

Die in Fig. 2 dargestellte Seitenansicht entspricht der Ausführungsform gemäss Fig. 1. Hierbei bilden die Säulen 12 ein Portal, welches an seiner Quertraverse 14 die Schiebeeinrichtung 2 trägt. Der Stapel 1 ist auf einem Hubtisch 15 gelagert, der nach dem Abnehmen einer jeden Stapellage 3 um eine Stapellagenhöhe vertikal verfahrbar ist.

Die in Fig. 3 dargestellte Ausführungsform unterscheidet sich von der Ausführungsform gemäss Fig. 2 lediglich dadurch, dass nur eine Säule 12 mit Quertraverse 14 zur Aufnahme der Schiebeeinrichtung 2 vorgesehen ist. Die Säule 12 steht in dieser Ausführungsform zwischen dem Stapel 1 und dem Entstapelautomaten 5. Auch die Säule 13 und die zwischen den Säulen 12, 13 vorhandene Führungsbahn 11 sind zwischen dem Stapel 1 und dem Entstapelautomaten 5 angeordnet, in jedem Fall jedoch ausserhalb der schmalen Stirnseiten des Stapels 1.

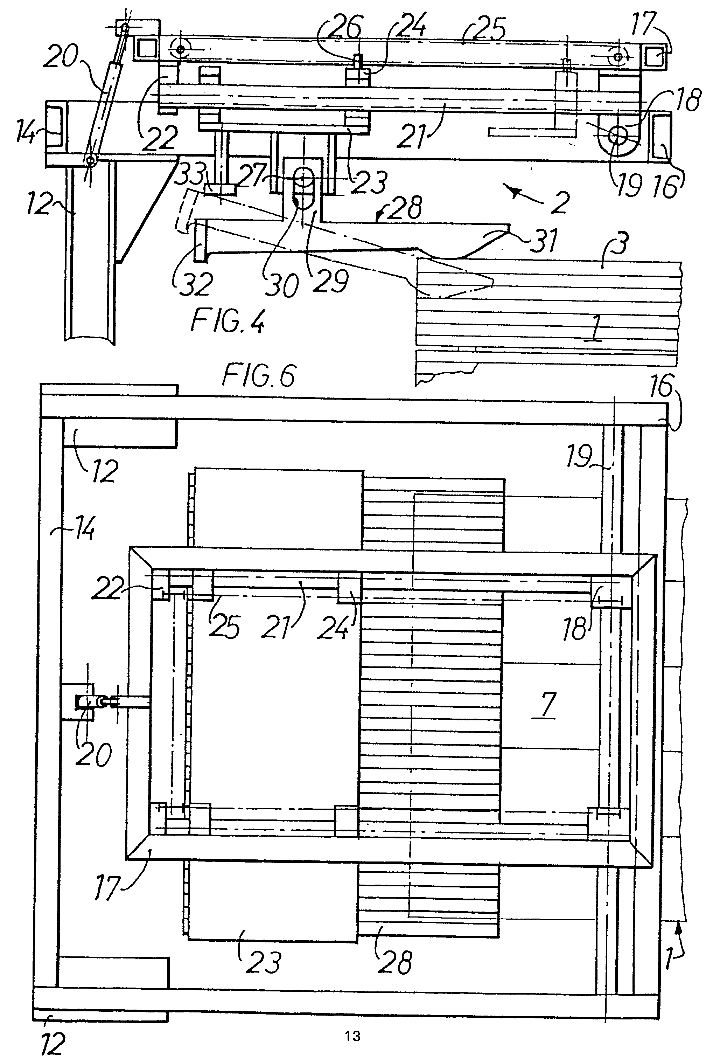

Die in den Fig. 4, 5 und 6 näher dargestellte Schiebeeinrichtung 2 ist innerhalb eines horizontal angeordneten U-förmigen Rahmens 16 gelagert, der an der Quertraverse 14 befestigt ist. Die Schiebeeinrichtung 2 besteht aus einem Rechteckrahmen 17, der mittels zweier sich nach unten erstreckender Ansätze 18 auf einer sich am vorderen Ende des Rahmens 16 befindlichen Rohrtraverse 19 schwenkbar gelagert ist. Am hinteren Ende ist der Rechteckrahmen 17 mittels einer Zylinderkolbeneinheit 20 an der Quertraverse 14 abgestützt. Unterhalb beider Längsseiten des Rechteckrahmens 17 erstrecken sich Führungsstangen 21, die am vorderen Ende in den Ansätzen 18 und am hinteren Ende in entsprechenden Ansätzen 22 befestigt sind. Unterhalb der Führungsstangen 21 erstreckt sich quer über dem Stapel 1 eine Lamellenführungsplatte 23, welche beidseits mit jeweils zwei Führungsbuchsen 24 auf den Führungsstangen 21 geführt ist. Für eine Hin- und Herbewegung der Lamellenführungsplatte 23 entlang der Führungsstangen 21 sind Kettentriebe 25 beidseits der Längsseiten des Rechteckrahmens 17 vorgesehen, welche über nicht näher dargestellte Antriebe antreibbar sind. Die Verbindung der Kettentriebe 25 mit der Lamellenführungsplatte 23 erfolgt über Kettenglieder 26, die an jeweils den vorderen Führungsbuchsen 24 befestigt sind.

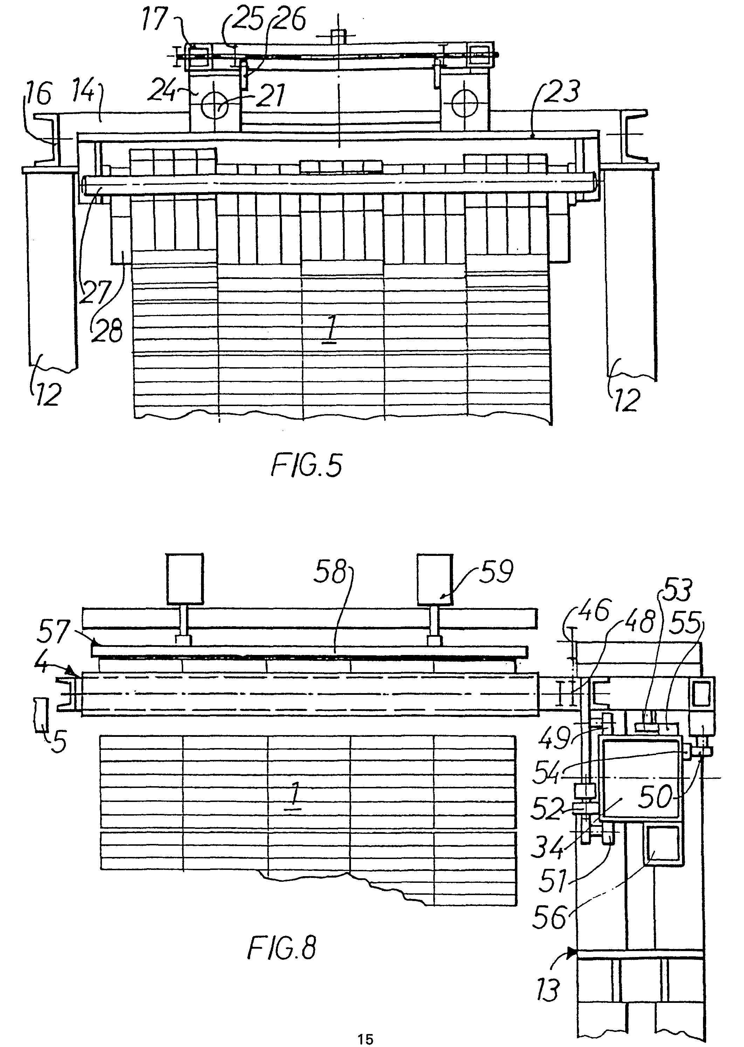

Unterhalb der Lamellenführungsplatte 23 erstreckt sich quer über den Stapel 1 eine Führungsstange 27, die an beiden Schmalseiten der Lamellenführungsplatte 23 gelagert ist. Die Führungsstange 27 trägt eine Vielzahl von nebeneinander in Schieberichtung angeordneten Schiebelamellen 28, die mit etwa mittig angeordneten Ansätzen 29 versehen sind, in welchen sich etwa vertikal erstreckende Langlöcher 30 angebracht sind, durch welche hindurch sich die Führungsstange 27 erstreckt. Die einzelnen Schiebelamellen 28 weisen ein nach unten abgerundetes schweres Vorderende 31 und ein leichteres, nach unten hakenartig ausgebildetes Hinterende 32 auf. Mit dem abgerundeten Vorderende 31 liegen die Schiebelamellen auf den einzelnen Stapellagen 3 des Stapels 1 auf. Mit dem hakenartigen Hinterende 32 hintergreifen die Schiebelamellen 28 die einzelnen Stapellagenelemente 7 der anzuschiebenden Stapellage 3. Durch diese Ausbildung können unterschiedlich lang ausgebildete, verwundene oder sonstwie ungleiche Stapellagenelemente 7 sicher ergriffen und angeschoben werden, so wie es in Fig. 5 dargestellt ist. Aufgrund der Langlöcher 30 können sich die Schiebelamellen 28 in unterschiedlichen Höhen zum Anschieben der Stapellage 3 befinden.

Oberhalb des Hinterendes 32 der Schiebelamellen 28 ist ein sich quer über diese erstreckender Begrenzungsanschlag 33 vorgesehen, der unterhalb der Lamellenführungsplatte 23 befestigt ist.

Durch die Anordnung der Zylinderkolbeneinheit 20 kann die Schiebeeinrichtung 2 um die Achse der Rohrtraverse 19 geschwenkt werden, um so bei einem Anheben einer Stapellage 3 eine vertikale Mitbewegung der Schiebeeinrichtung 2 zu ermöglichen.

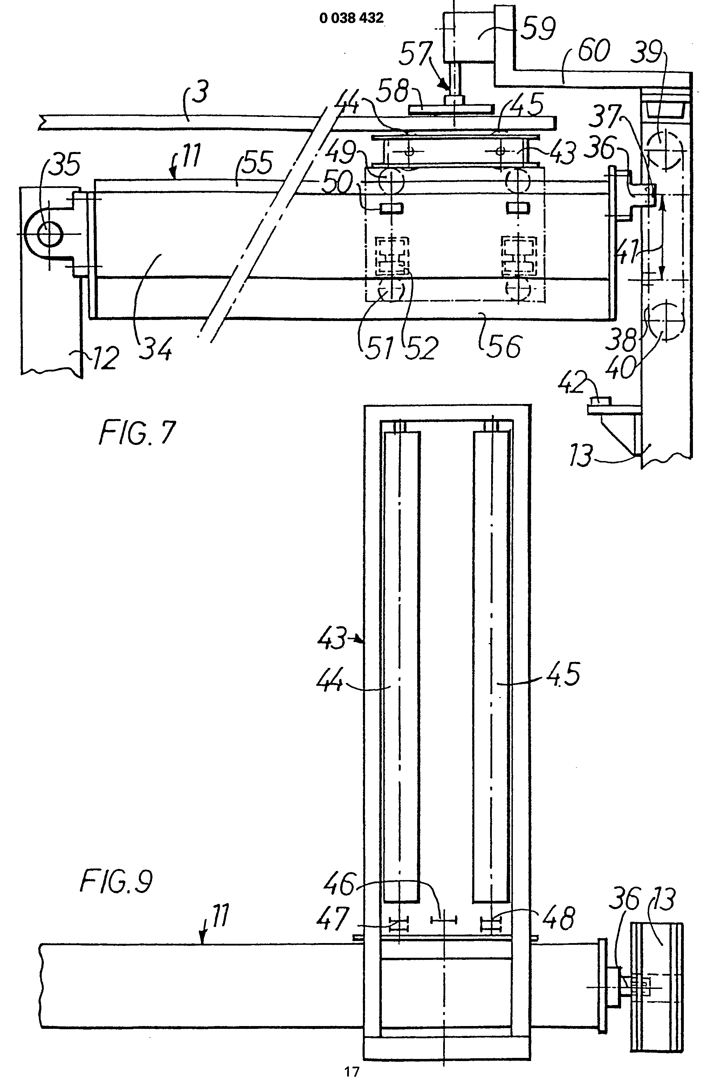

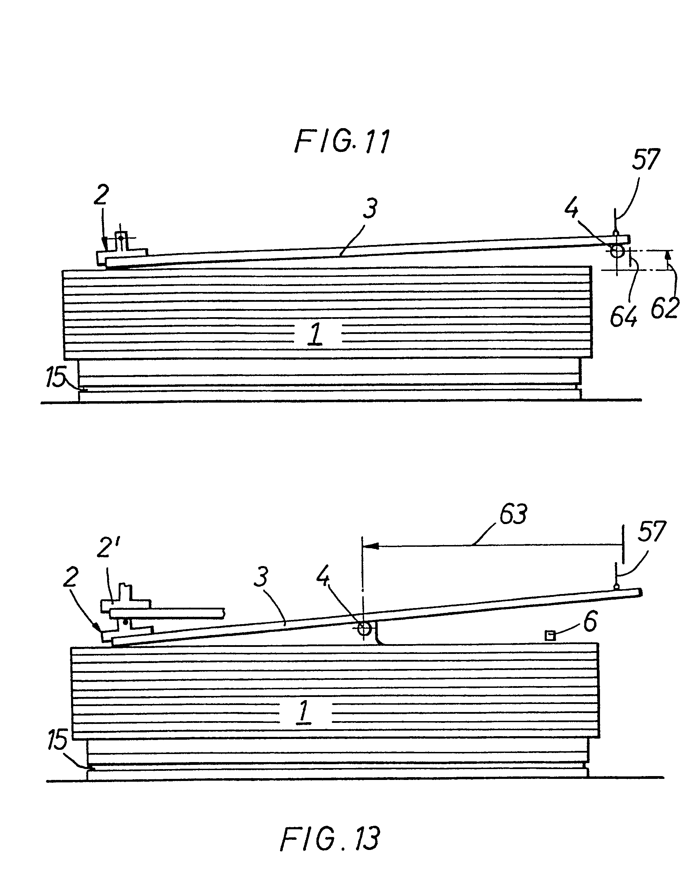

In den nachstehend beschriebenen Fig. 7, 8 und 9 ist das Stützelement 4 mit der Führungsbahn 11 dargestellt. Die Führungsbahn 11 besteht im wesentlichen aus einem in Querschnitt quadratischen Kastenträger 34, der an einem Ende in der Säule 12 über ein Schwenklager 35 gelagert ist und am anderen Ende mittels eines Verbindungsstückes 36 mit einem Kettenglied 37 eines Kettentriebes 38 verbunden ist, der um zwei in der Säule 13 gelagerte Kettenräder 39, 40 vertikal hin- und herbewegbar ist (Pfeil 41). Diese Bewegung wird durch eine nicht näher dargestellte Zylinderkolbeneinheit bewirkt, die am Kettentrieb 38 angreift. Für die Ruhestellung der Führungsbahn 11 ist an der Säule 13 eine Konsole 42 angebracht.

Entlang des Kastenträgers 34 der Führungsbahn 11 ist das Stützelement 4 hin- und herbewegbar. Dieses besteht aus einem einseitig am Kastenträger 34 gelagerten Rechteckrahmen 43, in dessen Schmalseiten zwei sich quer über den Stapel 1 erstreckende Rollen 44, 45 beidseits gelagert sind. Die Rollen 44, 45 überragen mit ihren Mantelflächen die Oberseite des Rechteckrahmens 43. Über nicht näher dargestellte Kettentriebe mit Kettenrädern 46, 47 und 48 sind sowohl das Stützelement 4 entlang der Führungsbahn 11 als auch die einzelnen Rollen 44, 45 antreibbar. Die Lagerung des Rechteckrahmens 43 am Kastenträger 34 erfolgt über jeweils paarweise nebeneinander angeordnete Rollen 49 bis 53, von denen sich die Rollen 49 an der Oberseite, die Rollen 51 an der Unterseite und die Rollen 52 an der Innenseite des Kastenträgers 34 unmittelbar abstützen. Für die sich an der Aussenseite des Kastenträgers 34 abstützenden Rollen 50 ist eine Führungsbahn 54 am Kastenträger befestigt. Für die Abstützung der Rollen 53 ist eine Führungsbahn 55 an der Oberseite des Kastenträgers 34 befestigt. Unterhalb des Kastenträgers 34 erstreckt sich ein im Querschnitt wesentlich kleiner weiterer Kastenträger 56.

Wie es die Fig. 7 und 8 zeigen, erstreckt sich in der Stellung des Stützelementes 4 vor der Stirnseite des Stapels 1 oberhalb des Stützelementes 4 ein Niederhalter 57 quer über das Stützelement 4. Dieser besteht im wesentlichen aus einer quer verlaufenden Platte 58 und zwei auf Abstand befindlichen Andrückeinrichtungen 59. Diese sind an einem Kragträger 60 befestigt, der am oberen Ende der Säule 13 fest gelagert ist.

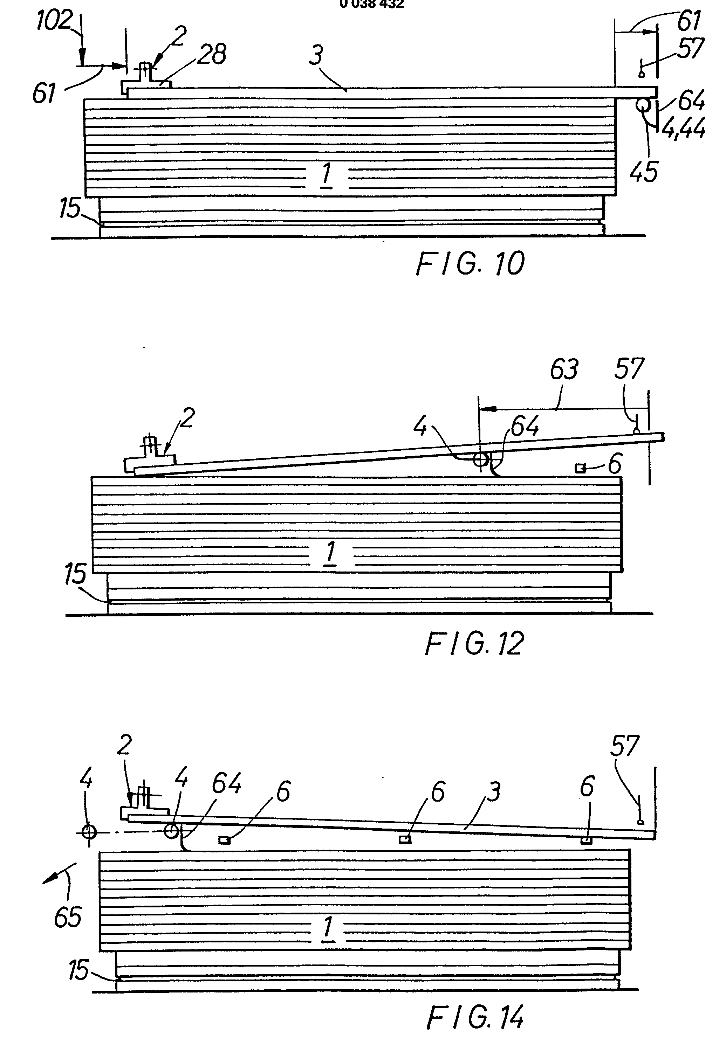

Die Wirkungsweise der vorbeschriebenen Vorrichtung wird nachfolgend anhand der Fig. 10 bis 14 erläutert:

Von dem auf dem Hubtisch 15 befindlichen Stapel 1 wird die oberste Stapellage 3 mittels der Schiebelamellen 28 der abgesenkten Schiebeeinrichtung 2 (Pfeil 102) um einen geringen Betrag abgeschoben, der durch den Pfeil 61 markiert ist. An der gegenüberliegenden Stirnseite des Stapels 1 überragt die Stapellage 3 um den entsprechenden Betrag (Pfeil 61) den Stapel 1 und liegt somit oberhalb der Rollen 44, 45 des Stützelementes 4 (Fig. 10). Dieses wird anschliessend um einen gewissen Betrag angehoben (Pfeil 62), so dass das entsprechende Ende der Stapellage 3 am Niederhalter 57 anliegt (Fig. 11). Anschliessend wird das Stützelement 4 in Richtung des Pfeiles 63 (Fig. 12) über den Stapel 1 in Richtung auf die in ihrer ausgefahrenen Stellung verharrende Schiebeeinrichtung 2 bewegt, so dass in den zwischen der Oberseite des Stapels 1 und der Unterseite der angehobenen Stapellage 3 gebildeten Zwischenraum ein erster Tragarm 6 quer über den Stapel 1 verfahrbar ist.

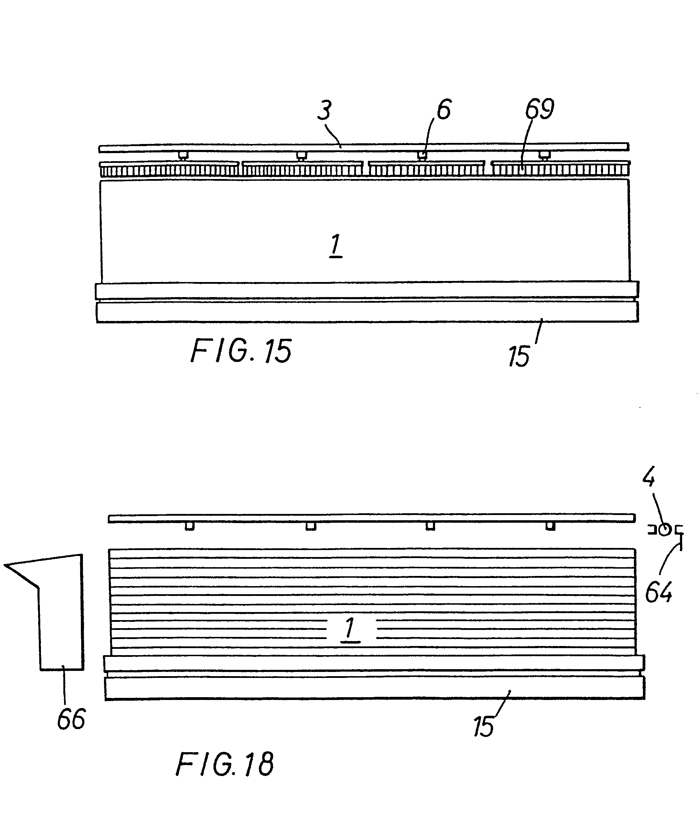

Bei weiterer Bewegung des Stützelementes 4 in Richtung auf die Schiebeeinrichtung 2 (Pfeil 63 in Fig. 13) wird zusammen mit der Stapellage 3 die Schiebeeinrichtung 2 um einen geringen Betrag angehoben (Position 2' in Fig. 13). Während der Horizontalbewegung des Stützelementes 4 in Richtung des Pfeiles 63 werden weitere Tragarme 6 unter die gehobene Stapellage 3 ausgefahren. Nach dem vollständigen Ausfahren des Stützelementes 4 (Fig. 14) wird die Stapellage 3 auf die Tragarme 6 abgelegt. Diese werden anschliessend in nicht näher dargestellter Weise wieder eingefahren, wobei die Stapellage 3 auf den später noch beschriebenen Entstapelautomaten 5 gebracht wird.

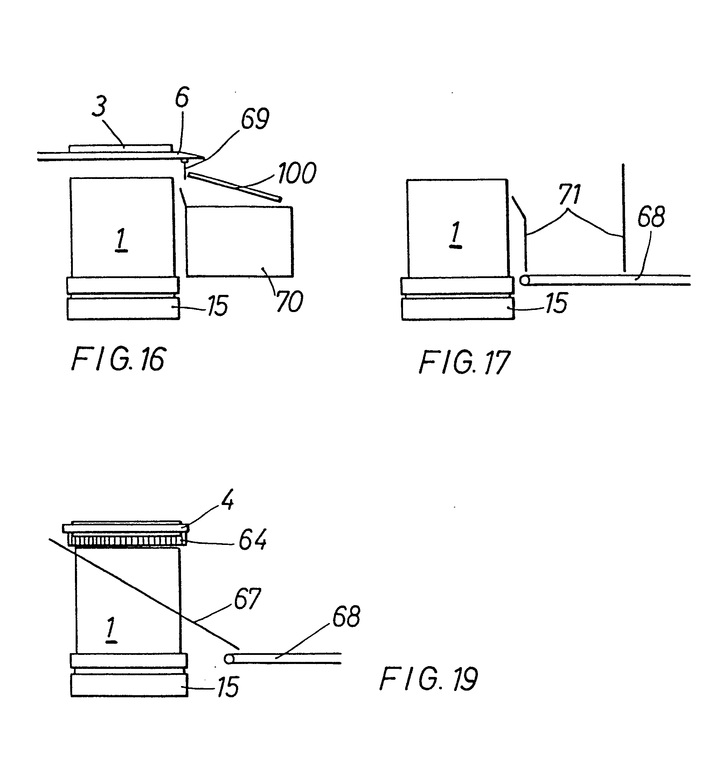

Wie es in den Fig. 10 bis 14 noch im Prinzip dargestellt ist, ist dem Stützelement 4 ein Bürstenelement 64 zugeordnet, das beim horizontalen Verfahren des Stützelementes 4 über den Stapel 1 dort eventuell befindliche, nicht dargestellte Zwischenleisten 100 (Fig. 16) mitnimmt und in Richtung des Pfeiles 65 (Fig. 14) abwirft.

Die ausgeworfenen Zwischenleisten können gemäss Fig. 18 unmittelbar in einen Behälter 66 eingebracht oder gemäss Fig. 19 über eine Schrägfläche 67 einem Abführungsförderband 68 zugeführt werden.

In einer in den Fig. 15 bis 17 dargestellten alternativen Ausführungsweise können unterhalb jedes Tragarmes 6 Abschiebebürsten 69 für Zwischenleisten 100 quer angebracht sein, welche beim Ausfahren des zugehörigen Tragarmes 6 die Zwischenleisten 100 in einen vor dem Stapel 1 befindlichen Behälter 70 austragen (Fig. 16). Anstelle des Behälters 70 können auch Führungsbleche 71 verwendet werden, welche die ausgeschobenen Zwischenleisten einem Förderband 68 zuführen (Fig. 17).

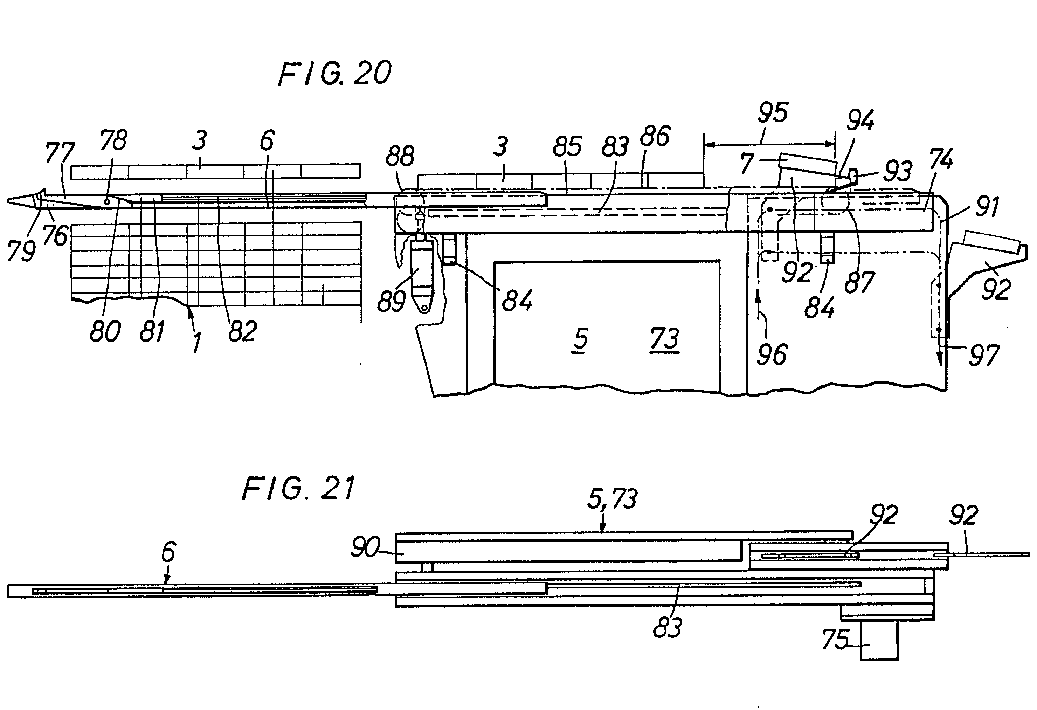

Der in Fig. 1 dargestellte Automat 5 zum Entstapeln einzelner übernommener Stapellagen 3 umfasst einen Grundrahmen 72 und auf diesem drei verschiebbare Seitenständer 73, welche jeweils einen der Tragarme 6 aufweisen. Der Grundrahmen 72 trägt ferner einen Schaltschrank 74' zur Aufnahme einer Steuereinrichtung für die verschiedenen, hier beschriebenen Bewegungsabläufe. In Fig. 20 und 21 ist der obere Bereich eines Seitenständers 73 dargestellt. Zur Führung des Tragarmes 6 weist der Seitenständer 73 ein Stapelaggregat 74 auf, in welchem der Tragarm 6 über nicht näher dargestellte Rollen geführt und motorisch ein- und ausfahrbar ist, wozu ein Flanschmotor 75 dient. Der Tragarm 6 weist an seinem freien Ende eine Tragarmspitze auf und unmittelbar dahinter einen Schlitz 76, in welchem eine Klinke 77 um einen Drehpunkt 78 schwenkbar gelagert ist. Die Klinke 77 weist am vorderen Ende einen Klinkenhaken 79 und am hinteren Ende eine Keilfläche 80 auf, gegen welche ein Klinkenkeil 81 anliegt, der über einen Keilschieber 82 betätigbar ist. Dieser wiederum wird vom vertikalen Hebelarm eines nicht dargestellten rechtwinkligen Hebels betätigt, in dessen horizontalen Hebelarm eine Rolle gelagert ist. Diese steht mit einer Klinkenhubschiene 83 in Eingriff, welche im Stapelaggregat 74 mittels zweier Hubschienenzylinder 84 vertikal heb- und senkbar gelagert ist. In angehobener Stellung der Klinkenhubschiene 83 wird der Keilschieber 82 und damit der Klinkenkeil 81 ständig gegen die Keilfläche 80 der Klinke 77 gedrückt, so dass deren Klinkenhaken 79 während der gesamten Einfahrbewegung des Tragarmes 6 in ihrer angehobenen Stellung verbleibt und so eine auf den Tragarmen 6 befindliche Stapellage 3 auf eine Ablagefläche 85 auf den Oberseiten der Seitenständer 73 überführen kann.

Die auf der Ablagefläche 85 der Seitenständer 73 befindliche Stapellage 3 wird von einer Förderkette 86 übernommen, welche um Kettenräder 87, 88 umgelenkt ist. Das Kettenrad 88 ist mittels eines Kettenhubzylinders 89 verschwenkbar, so dass die Kette aus einer Ebene unterhalb der Ablagefläche 85 in eine Ebene oberhalb der Ablagefläche 85 der Seitenständer 73 verschwenkt werden kann, in welcher sich die Stapellage 3 auf der Förderkette 86 befindet. In diesem Zustand kann der Tragarm 6 wieder ausgefahren werden, wobei gleichzeitig durch Absenken der Klinkenhubschiene 83 die Klinke 77 mit ihrem Klinkenhaken 79 wieder eingeschwenkt wird. Die Förderkette 86 ist von einem Kettenkasten 90 geführt, der neben dem Stapelaggregat 74 angeordnet ist.

Jeder Seitenständer 73 umfasst auf seiner Rückseite einen Umlaufkettenförderer 91 mit parallel geführt umlaufenden Mitnehmern 92 mit vertikalen Anschlägen 93 und leicht geneigten Mitnahmeflächen 94 für einzelne Stapellagenelemente 7. Wie es in Fig. 20 dargestellt ist, bewegt die Förderkette 86 die auf ihr befindliche Stapellage 3 schrittweise um einen Schritt 95, so dass die in Richtung des Pfeiles 96 vertikal nach oben bewegten Mitnehmer 92 mit ihren Mitnahmeflächen 94 jeweils ein Stapellagenelement 7 ergreifen und auf der rechten Seite in Richtung des Pfeiles 97 nach unten auf den Rollgang 8 abfördern können, von welchem die vereinzelten Stapellagenelemente 7 über den Einschussbeschleuniger 9 einer nicht dargestellten Bearbeitungsmaschine zugeführt werden.

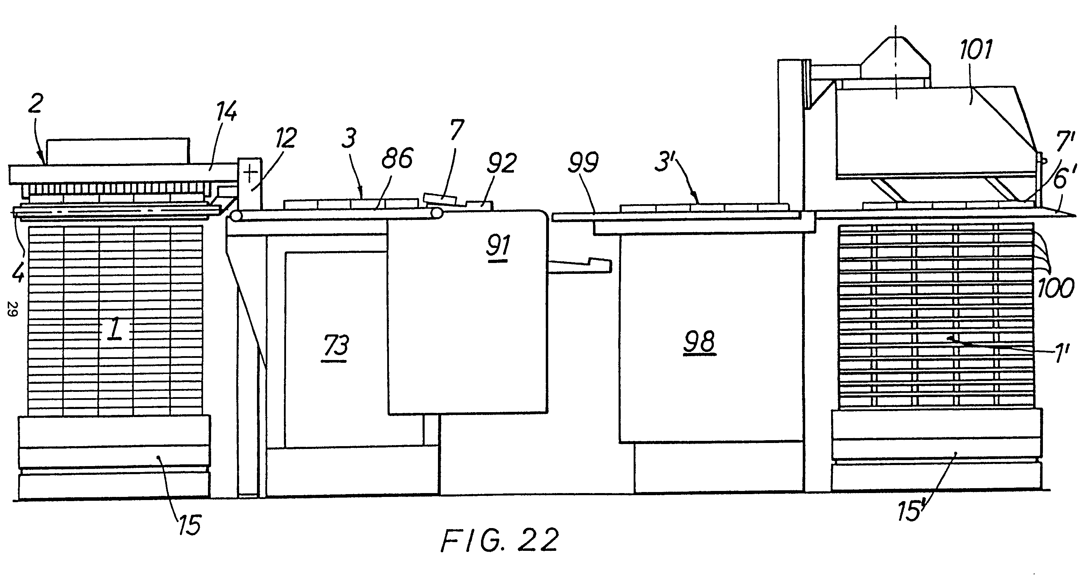

In alternativer Ausführungsform kann gemäss Fig. 22 in Bewegungsrichtung hinter dem Entstapelautomaten 5 ein Stapelautomat 98 angeordnet sein, auf dessen Oberseite eine Ablagefläche 99 zur Bildung einer neuen Stapellage 3' vorgesehen ist, welche mittels weiterer Tragarme 6' ausgefahren und auf einem neuen Stapel 1' oberhalb eines weiteren Hubtisches 15' abgelegt werden kann. Beim Ablegen können die einzelnen Stapellagenelemente 7' mit einem Luftspalt voneinander abgelegt werden. Zwischen jeweils zwei neuen Stapellagen 3' können Zwischenleisten 100 gelegt werden, welche aus einem Leistenmagazin 101 zugeführt werden. Auf diese Weise kann ein kompakt gestapelter Stapel 1 zu einem durchlüftbaren Trockenstapel 1' gestapelt werden, dessen einzelne Stapellagenelemente 7' mit vertikalen und horizontalen Luftspalten voneinander getrennt angeordnet sind.

## Patentansprüche

1. Vorrichtung zum lagenweisen Entstapeln insbesondere aus langgestreckten Profilhölzern geschichteter Stapel, mit einer an einer Stirnseite des Stapels quer angeordneten Schiebeeinrichtung zum Längsschieben einer Stapellage und mit einer Aufnahmeeinrichtung für die Stapellage, dadurch gekennzeichnet, dass in einem etwa der Länge des Stapels (1) entsprechenden Abstand von der Schiebeeinrichtung (2) an der dieser gegenüberliegenden Stirnseite des Stapels (1) ein vertikal hin- und herbewegbares Stützelement (4) für die teilweise vom Stapel (1) längs abgeschobene Stapellage (3) gelagert ist, und dass die Aufnahmeeinrichtung für die abgeschobene Stapellage (3) aus quer zum und neben dem Stapel (1) angeordneten, unter die mittels des Stützelementes (4) angehobene Stapellage (3) horizontal verfahrbaren Tragarmen (6) gebildet ist.

2. Vorrichtung nach Anspruch 1, dadurch gekennzeichnet, dass die Schiebeeinrichtung (2) eine Vielzahl von nebeneinander in Schieberichtung angeordneten Schiebelamellen (28) umfasst, die mit etwa mittig angeordneten Ansätzen (29) um in diesen angebrachte vertikale Langlöcher (30) auf einer quer zur Schieberichtung verlaufenden Führungsstange (27) gelagert sind und ein nach unten abgerundetes schweres Vorderende (31) und ein leichtes hakenartiges Hinterende (32) aufweisen, dass die Führungsstange (27) an einer in Schieberichtung motorisch hin- und herbewegbaren Lamellenführungsplatte (23) angeordnet ist, und dass die Lamellenführungsplatte (23) vertikal hin- und herbewegbar gelagert ist.

3. Vorrichtung nach Anspruch 2, dadurch gekennzeichnet, dass die Lamellenführungsplatte (23) an Führungsstangen (21) bewegbar gelagert ist, dass die Führungsstangen (21) an einem Rechteckrahmen (17) befestigt sind, und dass der Rechteckrahmen (17) mittels einer Zylinderkolbeneinheit (20) um eine quer zum Stapel (1) gerichtete Schwenkachse (19) verschwenkbar ist.

4. Vorrichtung nach einem der Ansprüche 1 bis 3, dadurch gekennzeichnet, dass oberhalb des in seiner von der Schiebeeinrichtung (2) entfernt gelegenen Endstellung befindlichen Stützelementes (4) ein Niederhalter (57) für die Stapellage (3) angeordnet ist.

5. Vorrichtung nach Anspruch 4, dadurch gekennzeichnet, dass der Niederhalter (57) aus einer quer über das Stützelement (4) verlaufenden Platte (58) und mindestens zwei vertikal bewegbaren Andrückelementen (59) gebildet ist, die mittels eines Tragarmes (6) an einer Säule (13) befestigt sind.

6. Vorrichtung nach einem der Ansprüche 1 bis 5, dadurch gekennzeichnet, dass das Stützelement (4) zur Schiebeeinrichtung (2) hin und von dieser weg im wesentlichen horizontal bewegbar gelagert ist.

7. Vorrichtung nach Anspruch 6, dadurch gekennzeichnet, dass das Stützelement (4) im wesentlichen aus mindestens einer mit quer zur Verschieberichtung gerichteten horizontalen Achse gelagerter Rolle (44, 45) gebildet ist.

8. Vorrichtung nach Anspruch 7, dadurch gekennzeichnet, dass die Rolle (44, 45) beidseits in einem Rechteckrahmen (43) gelagert ist, der mittels Rollen (49 bis 53) an einer Führungsbahn (11) gelagert ist.

9. Vorrichtung nach Anspruch 8, dadurch gekennzeichnet, dass die Führungsbahn (11) aus einem Kastenträger (34) gebildet ist.

10. Vorrichtung nach Anspruch 9, dadurch gekennzeichnet, dass der Kastenträger (34) im Bereich der Schiebeeinrichtung (2) mittels eines horizontalen Schwenklagers (35) an einer Säule (12) schwenkbar und am anderen Ende vertikal heb- und senkbar gelagert ist.

11. Vorrichtung nach Anspruch 10, dadurch gekennzeichnet, dass der Kastenträger (34) an einer vertikal bewegbaren Kette (38) angebracht ist, die an der Säule (13) gelagert und über einen hydraulischen Hubzylinder bewegbar ist.

12. Vorrichtung nach einem der Ansprüche 1 bis 11, dadurch gekennzeichnet, dass die Tragarme (6) der Aufnahmeeinrichtung für die Stapellage (3) an einem neben dem Stapel (1) angeordneten Entstapelautomaten (5) für stab- oder brettförmiges Stückgut ein- und ausfahrbar gelagert sind.

13. Vorrichtung nach Anspruch 12, dadurch gekennzeichnet, dass die Tragarme (6) an ihren freien Enden mit Klinken (77) versehen sind, die nach dem Ausfahren der Tragarme (6) aus diesen heraus nach oben schwenkbar sind.

14. Vorrichtung nach Anspruch 13, dadurch gekennzeichnet, dass die um Schwenkpunkte (78) schwenkbaren Klinken (77) an einem Ende mit Klinkenhaken (79) und am anderen Ende mit Keilflächen (80) versehen sind, mit welchen Klinkenkeile (81) und diese betätigende Keilschieber (82) verbunden sind, welche über zweiarmige Winkelhebel mittels einer Klinkenhubschiene (83) betätigbar sind, welche über Hubschienenzylinder (84) vertikal heb- und senkbar innerhalb eines Stapelaggregats (74) gelagert ist.

15. Vorrichtung nach einem der Ansprüche 12 bis 14, dadurch gekennzeichnet, dass die Tragarme (6) in Stapelaggregaten (74) von Seitenständern (73) gelagert sind, deren Oberseite Auflageflächen (85) für die Stapellage (3) bilden und mit schwenkbaren Kettentrieben (86) versehen sind, welche die mittels der eingefahrenen Tragarme (6) auf der Ablagefläche (85) abgelegte Stapellage (3) anheben und fördern.

16. Vorrichtung nach Anspruch 15, dadurch gekennzeichnet, dass die Seitenständer (73) mit Umlaufkettenförderern mit Mitnehmern (92) versehen sind, welche mit geneigten Mitnahmeflächen (94) versehen sind und einzelne Stapellagenelemente (7) von der Förderkette (86) abheben und auf der Rückseite der Seitenständer (73) auf einem Rollgang (8) ablegen.

17. Vorrichtung nach Anspruch 16, dadurch gekennzeichnet, dass die über die Mitnehmer (92) dem Rollgang (8) zugeführten Stapellagenelemente (7) in Längsrichtung einer Bearbeitungsmaschine zugeführt werden.

18. Vorrichtung nach einem der Ansprüche 16 oder 17, dadurch gekennzeichnet, dass die über die Mitnehmer (92) abgeführten Stapellagenelemente (7) einem weiteren Stapelautomaten (98) zur Trockenstapelung zugeführt werden.

19. Vorrichtung nach einem der vorangegangenen Ansprüche, dadurch gekennzeichnet, dass unterhalb der Tragarme (6) Abschiebebürsten (69) quer zur Längsrichtung der Tragarme (6) angeordnet sind.

20. Vorrichtung nach einem der vorangegangenen Ansprüche, dadurch gekennzeichnet, dass unterhalb des Stützelementes (4) Abschiebebürsten (64) quer zum Stapel (1) angeordnet sind.

## Claims

1. An apparatus for unloading piles of layers, more particularly piles stacked of oblong wood profiles, having a sliding device transversely arranged on one front side of the pile for longitudinally transferring a stacked pile, and a pick-up attachment for the pile, characterized in that at a distance corresponding to about the length of the pile (1) from the sliding device (2), a vertically reciprocating supporting element (4) for the pile layer (3) partly and longitudinally pushed from the pile (1) is supported, and that the pick-up attachment for the pile layer (3) is formed of supporting beams (6) arranged transversally to, and alongside of the pile (1) horizontally movable under the pile layer (3) lifted by means of the supporting element (4).

2. An apparatus according to claim 1, characterized in that the sliding device (2) comprises a number of sliding lamellar plates (28) arranged side by side in the sliding direction, and supported with centrally arranged studs (29) around vertical and longitudinal holes (30) provided therein on a guide bar (27) extending transversely to the sliding direction and having a heavy front and rounded off downwards (31), and a light hook-shaped rear end (32), and further characterized in that the guide bar (27) is arranged at the guide plate consisting of lamellar plates (23), and that the guide plate of lamellar plates is supported for performing a reciprocating motion.

3. An apparatus according to claim 2, characterized in that the guide plate of lamellar plates (23) is movably supported on guide bars (21) being fixed to quadrangular frames (17), and that the quadrangular frame (17) is horizontally swinging about a swivelling axle (19) transversely directed towards the pile by means of a cylinder piston-unit (20).

4. An apparatus according to one of the claims 1 to 3, characterized in that the supporting element (4) arranged in its final position distant from the sliding device, a holding-down device (57) for the pile layer (3) is arranged.

5. An apparatus according to claim 4, characterized in that the holding-down device (57) is formed of a plate (58) extending transversely to the supporting element (4) and of a least two vertically movable pressing elements (59) mounted to a column (13) by means of a bracket (6).

6. An apparatus according to one of the claims 1 to 5, characterized in that the supporting element (4) is supported in a substantially horizontally movable position towards the sliding device (2) and away from it.

7. An apparatus according to claim 6, characterized in that the supporting element (4) is substantially formed of at least one roller (44, 45) having a horizontal axle transversely directed to the direction of sliding.

8. An apparatus according to claim 7, characterized in that the roller (44, 45) is supported on both sides within a quandrangular frame (43) supported by means of rollers (49 to 53) on a guiding way (11).

9. An apparatus according to claim 8, characterized in that the guiding way (11) is constituted of a box girder (34).

10. An apparatus according to claim 9, characterized in that the box girder (34) within the range of the sliding device (2) is supported in such a manner as to be swivelled on a column (12) by means of a horizontal bearing (35) and vertically heaved at the other end.

11. An apparatus according to claim 10, characterized in that the box girder (34) is mounted to a vertically movable chain (38) supported on the column (13) and movable through an hydraulic jack.

12. An apparatus according to one of the claims 1 to 11, characterized in that the brackets (6) of the pick-up device for the pile layer (3) are supported in a retractable and extendible manner on an automatic unloader (5) for bar-shaped or boarded materials and cargos arranged close to the pile (1).

13. An apparatus according to claim 12, characterized in that the brackets (6) at their free ends are provided with latches (77) to be swivelled upwards from the extendible brackets (6).

14. An apparatus according to claim 13, characterized in that the latches (77) to be swivelled about the pivots (78) are provided at one end with latch hooks (79) and at the other end with wedge-shaped surfaces (80) with which are connected latch wedges (81) and wedge slides (82) operating them, that are operatable through double-armed angle levers by means of a latch lifting rail (83) supported through lifting rail cylinders (84) in a vertically raising and lowerable manner within a pile unit (74).

15. An apparatus according to one of the claims 12 to 14, characterized in that the brackets (6) are supported in pile units (74) of side posts (73) the upper side of which form supporting surfaces (85) for the pile layer (3) and are provided with swivelling chain drives raising and conveying the pile layer (3) laid down on the supporting surface (85) by means of the retracted brackets (6).

16. An apparatus according to claim 15, characterized in that the side posts (73) are provided with endless chain conveyors having studs (92) provided with inclined dog surfaces (94), said studs (92) lifting off the individual pile-layer elements (7) from the conveyor chain (86) and laying them down on the rear side of the side posts (73) on a roller table (8).

17. An apparatus according to claim 16, characterized in that the pile-layer elements (7) fed to the roller table (8) through the studs (92) are fed to a tooling machine in a longitudinal direction.

18. An apparatus according to one of the claims 16 or 17, characterized in that the pile-layer elements (7) carried off through the studs (92) are conveyed to a further automatic stapler (98) forming a drying pile.

19. An apparatus according to one of the precedent claims, characterized in that below the brackets (6) stripping brushes (69) are arranged transversely to the longitudinal direction of the brackets (6).

20. An apparatus according to one of the precedent claims, characterized in that below the supporting element (4) stripping brushes (64) are arranged transversely to the pile (1).

## Revendications

1. Dispositif pour décharger couche par couche surtout des piles de bois profilés, allongés, avec un dispositif de poussée, logé transversalement sur une face frontale de la pile, pour striper dans le sens longitudinal une couche de pile, et avec un dispositif de réception de la couche, caractérisé en ce qu'à une distance du dispositif de poussée (2) correspondant à peu près à la longueur de la pile (1) et sur la face frontale de la pile (1) opposée au dispositif de poussée est logé un élément d'appui (4), pouvant être déplacé verticalement en va-et-vient, pour la couche (3) qui est en partie stripée de la pile (1), et en ce que le dispositif de réception de la couche stripée (3) est formé d'avant-becs (6), disposés transversalement et à côté de la pile (1) et pouvant être poussés horizontalement sous la couche (3) soulevée moyennant l'élément d'appui (4).

2. Dispositif selon la revendication 1, caractérisé en ce que le dispositif de poussée (2) comporte de nombreuses lamelles (28) disposées les unes après les autres dans le sens de la poussée, logées par des épaulements (29) disposés à peu près au milieu, à travers des trous oblongs verticaux (29) effectués dans ces derniers sur une barre conductrice (27) posée dans le sens de la poussée et qui comportent une extrémité antérieure (31) lourde arrondie vers le bas et une extrémité légère (32) en forme de crochet, en ce que la barre conductrice (27) est disposée sur une plaque guide-lamelles (23) pouvant être déplacée par moteur en va-et-vient, et en ce que la plaque guide-lamelles (23) est logée de façon à pouvoir être déplacée verticalement en va-et-vient.

3. Dispositif selon la revendication 2, caractérisé en ce que la plaque guide-lamelles (23) est logée de façon mobile sur des barres conductrices (21), en ce que les barres conductrices (21) sont fixées sur un cadre rectangulaire (17) qui, moyennant une unité de pistons de cylindre (20), peut être pivoté autour d'un axe (19) logé transversalement par rapport à la pile (1).

4. Dispositif selon l'une des revendications 1 à 3, caractérisé en ce qu'un presse-bois (57) pour la couche de pile (3) est disposé au-dessus de l'élément d'appui (4) en positionn extrême de ce dernier, position qui est distante du dispositif de poussée (2).

5. Dispositif selon la revendication 4, caractérisé en ce que le presse-bois (57) comporte une plaque (59) passant transversalement au-dessus de l'élément d'appui (4) et au moins deux éléments pressants mobiles verticaux (59) fixés sur une colonne (13) moyennant un avant-bec (6).

6. Dispositif selon l'une des revendications 1 à 5, caractérisé en ce que l'élément d'appui (4) est logé de façon mobile essentiellement à l'horizontale en direction du dispositif de poussée (2) et en direction opposée.

7. Dispositif selon la revendication 6, caractérisé en ce que l'élément d'appui (4) est formé essentiellement d'un rouleau (44, 45) au moins avec un axe horizontal logé transversalement à la direction de déplacement.

8. Dispositif selon la revendication 7, caractérisé en ce que le rouleau (44, 45) est logé bilatéralement dans un cadre rectangulaire (43) qui est monté sur une glissière de guidage (11) moyennant des rouleaux (49 à 53).

9. Dispositif selon la revendication 8, caractérisé en ce que la glissière de guidage (11) est formée d'un support en caisson (34).

10. Dispositif selon la revendication 9, caractérisé en ce que le support en caisson (34) est logé dans le secteur du dispositif de poussée (2) de façon pivotable sur une colonne (12) moyennant un coussinet pivotable horizontal (35) et, sur l'autre extrémité, verticalement et de façon déplaçable en hauteur.

11. Dispositif selon la revendication 10, caractérisé en ce que le support en caisson (34) est fixé sur une chaîne (38) déplaçable à la verticale et logée sur une colonne (13) pouvant être déplacée moyennant un vérin de levage hydraulique.

12. Dispositif selon l'une des revendications 1 à 11, caractérisé en ce que les avant-becs (6) du dispositif de réception de la couche de pile (3) sont logés de façon à pouvoir être sortis et rentrés sur un déchargeur automatique (5) pour pièces en forme de barre ou de planche disposé à côté de la pile (1).

13. Dispositif selon la revendication 12, caractérisé en ce que les avant-bras (6) sont munis de cliquets (77) à leurs extrémités libres qui peuvent être pivotés vers le haut après la sortie des avant-becs (6).

14. Dispositif selon la revendication 13, caractérisé en ce que les cliquets (77) pivotables autour de points d'appui (78) sont munis, à une extrémité, de crochets (79) et, à l'autre extrémité, de surfaces en forme de clavette (80) qui sont en contact avec des cales (81) actionées par des curseurs (82) pouvant être actionnés à travers des leviers angulaires à deux bras moyennant un rail de levage (83) logé dans un groupe d'empilage (74) et pouvant être levé et abaissé moyennant des vérins (84).

15. Dispositif selon l'une des revendications 12 à 14, caractérisé en ce que les avant-bras (6) sont logés dans des groupes d'empilage (74) par des supports latéraux (73) dont la face supérieure forme des surfaces d'appui (85) pour la couche de pile (3) et sont munis d'entraînement à chaîne (86) qui soulèvent et transportent la couche de pile (3) posée par les avant-becs (6) sur la surface de dépôt (85).

16. Dispositif selon la revendication 15, caractérisé en ce que les supports latéraux (73) sont munis de transporteurs à chaîne avec poussoirs (92), équipés de surfaces d'entraînement obliques (94), soulèvent différents éléments de couche (7) de la chaîne transporteuse (86) et les posent sur un train de rouleaux (8) à l'arrière des supports latéraux (73).

17. Dispositif selon la revendication 16, caractérisé en ce que les éléments de couche (7) transférés par les poussoirs (92) sur le train de rouleaux (8) sont amenés en direction longitudinale à une machine d'usinage.

18. Dispositif selon l'une des revendications 16 ou 17, caractérisé en ce que les éléments de couche (7) enlevés par les poussoirs (92) sont transférés à une autre empileuse automatique (98) pour former une pile sèche.

19. Dispositif selon l'une des revendications précédentes, caractérisé en ce que, en dessous des avant-becs (6), des brosses de poussée (69) sont disposées en travers de la direction longitudinale des avant-becs (6).

20. Dispositif selon l'une des revendications précédentes, caractérisé en ce que des brosses de poussée (64) sont disposées en dessous de l'élément d'appui (4) transversalement par rapport à la pile (1).

FIG. 1

0 038 432

FIG. 2

FIG. 3

FIG.4

FIG.6

FIG.5

FIG.8

0 038 432

FIG. 7

FIG. 9

FIG. 11

FIG. 13

FIG. 10

FIG. 12

FIG. 14

FIG. 15

FIG.18

FIG. 16

FIG. 17

FIG. 19

FIG. 20

FIG. 21

FIG. 22